# EUROPÄISCHE PATENTSCHRIFT

(11) **EP 3 236 550 B1**
(45) Veröffentlichungstag und Bekanntmachung des Hinweises auf die Patenterteilung: **05.02.2020**
(21) Anmeldenummer: 16166466.9
(22) Anmeldetag: 21.04.2016
(51) Int. Cl.: H02G 1/12

(54) **VERFAHREN ZUM ABISOLIEREN EINES KABELS**
METHOD FOR REMOVING THE INSULATION FROM A CABLE
PROCEDE DESTINE A DENUDER UN CABLE

(43) Veröffentlichungstag der Anmeldung: 25.10.2017
(73) Patentinhaber: Komax Holding AG, 6036 Dierikon (CH)
(72) Erfinder: VIVIROLI, Stefan, 6048 Horw (CH)
(74) Vertreter: Inventio AG

(56) Entgegenhaltungen:
- EP-A1- 2 717 399
- JP-A- 2008 061 459
- US-A- 5 038 457

## Beschreibung

Die Erfindung betrifft ein Verfahren zum Abisolieren eines elektrischen Kabels.

Elektrische Kabel umfassen wenigstens einen elektrischen Leiter, z.B. einen Draht oder eine Litze, sowie eine Isolierhülle aus Kunststoff, die den Leiter entlang seiner Länge umschliesst und elektrisch isoliert. Um das Kabel mit anderen elektrischen Komponenten (z.B. Stecker, Klemmen) zu verbinden, wird ein Teil der Isolierhülle an einem Kabelende entfernt und der Leiter freigelegt. Dieser Vorgang des Entfernens der Isolierhülle wird als Abisolieren bezeichnet.

Der Abisolierprozess erfolgt heute zumeist automatisch mittels Vorrichtungen, die wenigstens ein Abisoliermesser umfassen. Vorzugsweise sind zwei Abisoliermesser vorgesehen, die von entgegengesetzten Richtungen entlang einer Gerade gegen das Kabel verschiebbar sind, um die Isolierhülle aufzutrennen und mit einer Bewegung der Abisoliermesser vom Leiter abziehen zu können.

Idealerweise soll bei diesem Abisolierprozess die Isolierhülle vollständig aufgetrennt und abgezogen werden, ohne dass die Abisoliermesser den Leiter berühren. Da die Kontaktierung des Leiters durch die Abisoliermesser jedoch zur Signalisierung der Durchtrennung der Isolierhülle verwendet wird, ist eine kurzzeitige Berührung des Leiters im Bereich, in dem die Abisolierung vollzogen werden soll, jedoch erwünscht. In der Praxis ist es daher wesentlich, Beschädigungen bei dieser zeitweiligen Kontaktierung des Leiters zu vermeiden.

Bei der Wahl der Abisolierparameter besteht somit ein Konflikt. Sofern die Schnitttiefe nicht gross genug gewählt wird, um Verletzungen des Leiters zu vermeiden, soll der Leiter nicht kontaktiert werden; wenn die Isolierhülle dabei nicht ausreichend eingeschnitten wird, kann es passieren, dass beim Abziehen die Isolierhülle derart abgerissen wird, dass unsaubere Isolationskanten entstehen. Zudem ist es möglich, dass die Isolierhülle den Abisoliermessern entgleitet und nicht vollständig abgezogen werden kann.

Sofern die Schnitttiefe hingegen zu gross gewählt wird, resultieren Beschädigungen des Leiters, die eine Verwendung des bearbeiteten Kabels unter Umständen verbieten. Zusätzlich ergeben sich Belastungen der Abisoliermesser.

Zur Vermeidung dieses Problems wird in WO2014/060218A1 vorgeschlagen, die Kontaktierung des Leiters durch ein Abisoliermesser mittels eines kapazitiven Sensors zu detektieren und das Abisoliermesser im Falle des Vorliegens einer Kontaktierung neu zu justieren. Dazu wird eine Referenzkapazität mit einer Spannung geladen und vorzugsweise periodisch mit der Kapazität der Abisoliermesser verbunden, die sich erhöht, falls das Abisoliermesser den metallischen Leiter kontaktiert. In Abhängigkeit davon, ob das Abisoliermesser den Leiter kontaktiert oder nicht, resultiert eine Ladungsänderung der Referenzkapazitäten und eine entsprechende Spannungsänderung, die mit einem Referenzwert verglichen wird, um festzustellen, ob eine Kontaktierung vorliegt oder nicht.

Um die Abisolierprozesse weiter zu verbessern wird in EP 2 919 340 A1 ein Verfahren vorgeschlagen, mittels dessen die Abisolierparameter optimiert werden können. Dazu wird in einer optionalen ersten Phase die Einschnitttiefe ermittelt, bei der der Leiter kontaktiert wird. In einer zweiten Phase erfolgt eine Abisolierung mit Auftrennen und Abziehen der Isolierhülle. Dabei werden die Abisoliermesser nach der Auftrennung der Isolierhülle um ein vorgegebenes Mass, den sogenannten Wayback auseinandergefahren, der derart gewählt wird, dass der Leiter während des Abziehen der abgetrennten Isolierhülle nicht mehr kontaktiert, die abgetrennte Isolierhülle aber sicher gehalten wird. In der zweiten Phase werden sequenziell Kabel abisoliert, bis beim Auftrennen der Isolierhülle einerseits und beim Abziehen der Isolierhülle andererseits keine Kontaktierung des Leiters mehr auftritt, In einer optionalen dritten Phase wird das mit den optimierten Abisolierparametern bearbeitete Kabel optisch geprüft, um das Ergebnis der Optimierung zu überprüfen.

Zu beachten ist jedoch, dass die Kabelgeometrie jedoch oft nicht bekannt und über die gesamte Kabellänge auch nicht konstant ist. Die Kabelgeometrie kann von Produktionslos zu Produktionslos innerhalb desselben Kabelgebindes ändern, sodass zuvor optimierte Abisolierparameter nicht mehr zufriedenstellend sind. Die bekannte Bestimmung der Abisolierparameter erfordert zudem mehrere Einschnitte, die statistisch ausgewertet werden müssen, was zeitaufwendig ist und zu Materialausschuss führt. Die optische Inspektion des Leiters in Phase 3 ist wiederum mit einem erheblichen Aufwand verbunden.

Wie erwähnt sind nicht alle Kontaktierungen des Leiters durch die Abisoliermesser kritisch. Um festzustellen, welche der abisolierten Kabel den Qualitätsanforderungen genügen, wird in EP 2 717 399 A1 ein Verfahren zur Überwachung der Abisolierprozesse vorgeschlagen. Nach der Auftrennung der Isolierhülle, während des Abziehvorgangs, werden die Längspositionen der Abisoliermesser ermittelt, an denen mittels einer Detektiereinrichtung festgestellt wurde, dass wenigstens eines der Abisoliermesser den Leiter berührt hat. Die Auswertung der Längspositionen, an denen Leiterberührungen erfolgt sind, erlaubt in der Folge eine Klassifizierung der abisolierten Kabel.

Die genannten Verfahren erlauben es, Abisolierparameter punktuell zu optimieren und eine Qualitätsanalyse und Klassifizierung der bearbeiteten Kabel punktuell vorzunehmen. Die beschriebenen Prozesse zur Optimierung der Betriebsparameter der Abisoliervorrichtung sind jedoch noch immer sehr zeitaufwendig.

Zu beachten ist ferner, dass bei den beschriebenen Kontaktierungen der Leiter nicht nur die Leiter beschädigt, sondern auch die Abisoliermesser belastet werden und einem höheren Verschleiss unterliegen.

Der vorliegenden Erfindung liegt die Aufgabe zu Grunde, die beschriebenen Abisolierverfahren weiter zu verbessern.

Insbesondere soll ein Verfahren geschaffen werden, anhand dessen die Präzision bei der Durchführung der Abisolierung der Kabel erhöht und die Belastung der Abisoliermesser sowie der Wartungsaufwand der Abisoliervorrichtung entsprechend reduziert werden kann. Nicht tolerierbare Beschädigungen des Leiters sowie unvollständige Abtrennungen der Isolationshülle sollen weitgehend vermieden werden. Mangelhaft abisolierte Kabel sollen hingegen rasch identifiziert werden.

Optimierte Abisolierparameter sollen rascher und mit reduziertem Aufwand ermittelt werden können. Mit dem erfindungsgemässen Verfahren sollen die Abisolierparameter zudem schnell an Änderungen der Kabeleigenschaften adaptiert werden können. Eine allenfalls nötige Nachjustierung der Einschneidetiefe und des sogenannten "Wayback", d.h. der Rückstellbewegung, bei der die Abisoliermesser nach dem Anschneiden wieder leicht zurückgefahren bzw. geöffnet werden, soll automatisch und mit hoher Präzision erfolgen. Dabei soll ein zu weites Auseinandergefahren der Abisoliermesser, das insbesondere bei geringen Schichtdicken der Isolierhülle kritisch ist, vermieden werden. Eine optische Inspektion der abisolierten Kabel soll entfallen. Die Prüfung der Kabel bzw. die Ermittlung von abisolierten Kabeln, welche vorgegebene Qualitätskriterien nicht erfüllen, soll mit erhöhter Präzision automatisch durchgeführt werden können

Die Qualität der abisolierten Leiterendstücke soll einfach und effizient bestimmt werden können. Die Qualitätskriterien, welche ein abisoliertes Kabel erfüllen soll, sollen vom Anwender wahlweise festgelegt werden können.

Diese Aufgabe wird durch ein Verfahren gemäss Anspruch 1 gelöst. Vorteilhafte Ausgestaltungen der Erfindung sind in weiteren Ansprüchen angegeben.

Das Verfahren dient zum Abisolieren und Prüfen eines Kabels, das wenigstens einen in einer Isolierhülle eingeschlossenen Leiter umfasst, mit einer Abisoliervorrichtung, die eine Steuervorrichtung und wenigstens ein Abisoliermesser aufweist. Beispielsweise kann dabei das wenigstens eine Abisoliermesser der Abisoliervorrichtung mittels eines ersten Antriebs in einer Querrichtung gegen den Leiter ausfahrbar und zurückfahrbar und mittels eines zweiten Antriebs in einer Längsrichtung parallel zum Leiter verschiebbar sein. Das Verfahren umfasst die folgenden Schritte. In einer ersten Phase wird das wenigstens eine Abisoliermesser in Querrichtung gegen das sich in einer Längsrichtung erstreckende Kabel ausgefahren, um die Isolierhülle bzw. den Kabelmantel aufzutrennen. Vorzugsweise sind zwei in Querrichtung gegeneinander verschiebbare Abisoliermesser vorgesehen. Nachstehend wird daher nur noch auf die bevorzugte Ausgestaltung der Abisoliervorrichtung mit zwei Abisoliermessern Bezug genommen.

In einer zweiten Phase werden die Abisoliermesser in Relation zum Kabel in Längsrichtung verschoben, um den aufgetrennten Teil der Isolierhülle vom Leiter abzuziehen und diesen freizulegen. Diese Relativbewegung zum Abziehen der Isolation umfasst beispielsweise ein Verschieben des Abisoliermessers oder der Abisoliermesser bei festgehaltenem Kabel oder ein Verschieben des Kabels bei festgehaltenem Abisoliermesser bzw. festgehaltenen Abisoliermessern; es wären allenfalls sogar auch Mischformen der vorerwähnten Bewegungsmuster denkbar. In der ersten und oder der zweiten Phase wird wenigstens eine erste Kontaktierung des Leiters durch die Abisoliermesser detektiert. Nach der Detektion einer Kontaktierung werden die Abisoliermesser in Querrichtung zurückfahren, um die Kontaktierung wieder aufzuheben.

Erfindungsgemäss werden zum Zeitpunkt der Kontaktierung des Leiters die Bewegungsdaten der Abisoliermesser unverzüglich erfasst. Für die betreffende Kontaktierung des Leiters wird aus den vorliegenden Bewegungsdaten ein weiterführender Bewegungsverlauf der Abisoliermesser in Relation zum Kabel ermittelt. Beispielsweise kann die Analyse des Bewegungsverlaufs zur Qualitätsüberwachung verwendet werden, sodass fehlerhafte Kabel einfach aussortiert werden können. Die Bewegungsdaten können für die Steuerung der Bewegung der Abisoliermesser bzw. des Kabels im Hinblick auf eine Prozessverbesserung verwendet werden. Besonders vorteilhaft ist es, wenn aus den vorliegenden Bewegungsdaten ein weiterführender Bewegungsverlauf der Abisoliermesser und daraus ein entsprechender lokaler Qualitätswert gebildet wird, der mit einer Qualitätsvorschrift verglichen wird, um festzustellen, ob die Qualität des Leiters den vom Anwender festgelegten Anforderungen genügt. Auch wenn zwei Abisoliermesser vorgesehen sind, kann nur eine Kerbe im Leiter resultieren. Es wären aber Konstellationen denkbar, bei denen zwei nahezu identische Kerben im Leiter durch die zwei Abisoliermesser resultieren, die zum weiterführenden oder extrapolierten Bewegungsverlauf der Abisoliermesser nach der Kontaktierung des Leiters korrespondieren.

Als Bewegungsdaten werden vorzugsweise die Position der Abisoliermesser einerseits und andererseits der in Querrichtung und Längsrichtung zurückgelegte Weg und/oder die Geschwindigkeit und/oder die Beschleunigung für jede Kontaktierung aufgezeichnet. Diese kinematischen Grössen können durch Positionssensoren, Geschwindigkeitssensoren, und Beschleunigungssensoren ermittelt werden. Besonders vorteilhaft können diese kinematischen Grössen durch Überwachung der Antriebe ermittelt werden. Eine zurückgelegte Strecke ist proportional zur Anzahl der Umdrehungen einer Welle eines Antriebsmotors. Die Geschwindigkeit der Abisoliermesser korrespondiert z.B. zur Drehgeschwindigkeit der Welle des Antriebsmotors und die Beschleunigung der Abisoliermesser korrespondiert z.B. zur Änderung der Drehgeschwindigkeit der Welle des Antriebsmotors. Die Bewegungsdaten, einschliesslich der Position der Abisoliermesser können daher verzögerunglos den Antriebsvorrichtungen entnommen werden. Ferner können auch auftretende Kräfte gemessen und berücksichtigt werden.

Beim Eindringen des Abisoliermessers resultiert nämlich eine Kerbe, die in der ersten Phase beim Auftrennen der Isolierhülle radial gegen die Zentralachse des Leiters verläuft. Sofern eine Kontaktierung in der zweiten Phase erfolgt, verschiebt sich die Schneide des Abisoliermessers einerseits gegen die Längsachse des Leiters und andererseits parallel zur Längsachse in Längsrichtung, wobei ein entsprechendes Kerbprofil resultiert.

Der Verlauf der Kerbprofile in der ersten und zweiten Phase ist vor allem von der Bewegung der Abisoliermesser zum Zeitpunkt der Kontaktierung abhängig, weshalb anhand der Bewegungsdaten der Abisoliermesser die resultierenden Kerbprofile vorteilhaft ermittelt werden können.

Die Kerbprofile müssen daher nicht mehr optisch, z.B. anhand eines Mikroskops in aufwendiger Detailarbeit ermittelt werden, sondern stehen innert kürzester Zeit zur Verfügung. Die nach wenigen Taktzyklen eines in der Steuervorrichtung vorgesehenen Mikroprozessors zur Verfügung stehenden virtuellen Kerbprofile können einerseits zur Prüfung der Endstücke der Leiter und andererseits zur Optimierung der Betriebsparameter der Antriebseinheiten verwendet werden.

Die innerhalb der ersten Phase und/oder der zweiten Phase zu Beginn und/oder während der Kontaktierung erfassten Bewegungsdaten erlauben es z.B., die Eindringtiefe der Abisoliermesser in den Leiter als lokalen Qualitätswert zu ermitteln. Die ermittelte Eindringtiefe kann nun mit einer maximal zulässigen Eindringtiefe, die als Qualitätsvorschrift vorliegt, verglichen werden, um festzustellen, ob das abisolierte Kabel den Anforderungen des Anwenders genügt.

In der zweiten Phase wird anhand der Bewegungsdaten vorzugsweise die Eindringlänge als lokaler Qualitätswert ermittelt und vorzugsweise mit der maximal zulässigen Eindringlänge als Qualitätsvorschrift verglichen. Das erfindungsgemässe Verfahren erlaubt es, beliebige Kerbprofile zu ermitteln und mit entsprechenden Qualitätsvorschriften zu vergleichen.

Zur Ermittlung der Eindringtiefe und/oder der Eindringlänge oder eines gesamten Kerbprofils werden vorzugsweise zusätzlich Vorrichtungsparameter der Antriebsvorrichtung und/oder Messerparameter der Abisoliermesser und/oder Kabelparameter des Kabels berücksichtigt. Als Vorrichtungsparameter werden vorzugsweise die Masse der mit dem wenigstens einen Abisoliermesser verbundenen bewegten Vorrichtungsteile, die Eigenschaften des ersten und/oder zweiten Antriebs und vorzugsweise auftretende Schaltverzögerungen berücksichtigt. Sofern geringe Massen bewegt werden, die Antriebe mit geringen Verzögerungen arbeiten und die erforderlichen Schaltsignale Messsignale und Steuersignale mit geringen Verzögerungen vorliegen, resultieren kleinere Kerbprofile. Andernfalls resultieren entsprechend grössere Kerbprofile.

Relevant für das Kerbprofil ist ferner die Form der Abisoliermesser, deren Schneide z.B. eine V-Form, eine Kreisbogenform oder eine Sägezahnform mit grösserem oder kleinerem Öffnungswinkel aufweist.

Besonders relevant als Kabelparameter ist ferner die Kabelgeometrie, insbesondere der Durchmesser und die Festigkeit des Leiters. Vorzugsweise werden auch der Durchmesser und die Festigkeit der Isolierhülle berücksichtigt. Sofern Kabelparameter ändern, wird das virtuelle Kerbprofil entsprechend angepasst. Für Leiter mit einer geringeren Festigkeit wird mit einer grösseren Eindringtiefe gerechnet.

Bei der Ermittlung der Kerbprofile wird vorzugsweise mit Erfahrungswerten oder Kennlinien gearbeitet, wobei die Vorrichtungsparameter, und/oder die Messerparameter und/oder die Kabelparameter ergänzend berücksichtigt werden. Z.B. werden Kerbprofile für unterschiedliche Bewegungsdaten aufgenommen. Diese Kerbprofile können daher aus der Datenbank entnommen werden, wenn entsprechende Bewegungsdaten vorliegen. Die Kabelparameter werden vorzugsweise auch für die Festlegung der Qualitätsvorschriften hinzugezogen. Sofern der Leiter (z.B. Draht oder Litze) einen grösseren Radius aufweist, kann eine grössere absolute Eindringtiefe toleriert werden. Vorzugsweise wird daher mit einer relativen Eindringtiefe gerechnet, die sich aus dem Verhältnis von Eindringtiefe zu Radius ergibt. Z.B. wird eine Eindringtiefe <5% toleriert.

Vorzugsweise wird zu Beginn des Abisolierprozesses eine Schnitttiefe provisorisch festgelegt, für die erwartet wird, dass die Isolierhülle völlig durchtrennt, der Leiter aber nicht beschädigt wird. Anhand wenigstens einer der detektieren Kontaktierungen wird dieser Wert der Schnitttiefe stetig optimiert, wobei der erste Antrieb vorzugsweise derart eingestellt wird, dass die Geschwindigkeit des wenigstens einen Abisoliermessers beim Ausfahren in Querrichtung beim Erreichen der optimierten Schnitttiefe unterhalb eines festgelegten Grenzwerts liegt. Dieser Grenzwert kann z.B. bei null oder nahe null liegen. Auf diese Weise wird bewirkt, dass die Geschwindigkeit, mit der die Abisoliermesser gegebenenfalls in den Leiter eindringen, bereits reduziert ist und eine grössere Schädigung des Leiters sowie eine entsprechende Belastung des Abisoliermessers vermieden werden kann.

Die Parameter für das Zurückfahren der Abisoliermesser in Querrichtung werden vorzugsweise in Abhängigkeit der ermittelten Eindringtiefe derart gewählt, dass die Kontaktierung des Leiters aufgehoben wird. Beim Zurückfahren (Wayback) der Abisoliermesser soll vermieden werden, dass diese zu weit geöffnet werden und der erforderliche Kontakt mit der abgetrennten Isolierhülle verloren geht. Dies ist besonders wichtig, falls die Schichtdicke der Isolierhülle gering ist. Das erfindungsgemässe Verfahren erlaubt es nun aufgrund der ermittelten Eindringtiefe die Abisoliermesser nur so weit zu öffnen, dass der Kontakt mit dem Leiter aufgehoben ist und die abgetrennte Isolierhülle noch sicher gehalten ist. Die Auslenkung der Abisoliermesser kann daher rasch an Änderungen des Durchmessers des Leiters adaptiert werden.

Um den Abisolierprozess weiter zu verbessern, wird vorzugsweise vorgesehen, dass nach dem Zurückfahren der Abisoliermesser in Querrichtung diese in Querrichtung mit einer Geschwindigkeit wieder ausgefahren werden, die kleiner, vorzugsweise um ein Mehrfaches kleiner, ist, als die Geschwindigkeit, mit der die Abisoliermesser beim Auftrennen der Isolierhülle ausgefahren wurden. Mit diesem wichtigen Verfahrensschritt erfolgt eine kontinuierliche Adaption der Position der Abisoliermesser an die Oberfläche des Leiters. Die Abisoliermesser folgen dem Verlauf der Oberfläche des Leiters, sodass auch Kabel mit einer Leiteroberfläche zuverlässig abisoliert werden können, die eine erhebliche Welligkeit aufweisen.

In einer weiteren bevorzugten Ausgestaltung wird die Verschiebung der Abisoliermesser in Längsrichtung in Relation zum Kabel zum Abziehen der aufgetrennten Isolierhülle nach der Detektion der Kontaktierung des Leiters verzögert oder gestoppt, bis die Kontaktierung aufgehoben ist. Auf diese Weise wird die Eindringlänge oder Kerblänge und somit das Volumen des Kerbprofils einerseits und die Belastung der Abisoliermesser erheblich reduziert, sodass deren Abnutzung während der Abisolierprozesse deutlich abnimmt. Der Wartungsaufwand für die Abisoliervorrichtung reduziert sich entsprechend.

Vorzugsweise wird die Verschiebung der Abisoliermesser in Längsrichtung zum Abziehen der aufgetrennten Isolierhülle nach Aufhebung der Kontaktierung wieder beschleunigt, sodass die Abisolierprozesse trotz der schonenden Behandlung der Abisoliermesser und der Kabel mit hohen Taktzyklen ablaufen können.

Als Qualitätsvorschrift wird vorzugsweise ein Maximalprofil für eine maximal zulässige Kerbe festgelegt, die beim Eindringen des Abisoliermessers in den Leiter resultiert. Das Maximalprofil, das vorzugsweise die maximal zulässige Eindringtiefe und die maximal zulässige Eindringlänge umfasst, wird vorzugsweise in Abhängigkeit der Kabelgeometrie und der Festigkeit des Kabelmaterials gewählt.

Das Maximalprofil wird vorzugsweise in Funktion der Längsverschiebung der Abisoliermesser geändert. Z.B. werden die maximal zulässige Eindringtiefe und/oder die maximal zulässige Eindringlänge in Abhängigkeit der Längsverschiebung mit wenigstens einem Gewichtungsfaktor gewichtet. Beispielsweise werden eine maximale Eindringtiefe im Bereich der Auftrennung der Isolierhülle und eine maximale Eindringtiefe am Ende des Leiters festgelegt und die dazwischenliegenden maximal zulässigen Eindringtiefen und Eindringlängen entsprechend gewählt. Z.B. wird ein Gewichtungsfaktor verwendet, der linear mit der Verschiebung von 1.00 zu 0.75 ändert.

In einer weiteren bevorzugten Ausgestaltung wird für jede Kontaktierung des wenigstens einen Abisoliermessers mit dem Leiter aus den ermittelten Bewegungsdaten je ein lokaler Qualitätswert gebildet. Aus den lokalen Qualitätswerten, die, wie beschrieben, vorzugsweise gewichtet werden, wird in der Folge ein globaler Qualitätswert gebildet wird, der mit der Qualitätsvorschrift verglichen wird, um festzustellen, ob die Qualität des Leiters den Anforderungen genügt. Auf diese Weise gelingt es, Leiter zu erkennen, bei denen die zulässigen Werte der Eindringtiefe und der Eindringlänge nicht überschritten wurden, aber aufgrund zahlreicher Schwächungen trotzdem ein erheblicher Qualitätsmangel vorliegt.

Die Vorrichtung wird nachstehend in vorzugsweisen Ausgestaltungen anhand von Zeichnungen exemplarisch beschrieben. Es zeigen:
- Fig. 1: eine Abisoliervorrichtung 1 mit zwei von einem ersten und einem zweiten Antrieb 51, 52 angetriebenen Abisoliermessern 4, 4', mittels denen Kabel 8, die einen in einer Isolierhülle 82 eingeschlossenen Leiter 81 aufweisen, nach dem erfindungsgemässen Verfahren abisoliert werden können;
- Fig. 2: ein erstes Diagramm mit drei verschiedenen Bewegungsverläufen eines Abisoliermessers 4, das in Funktion der Zeit entlang einer Querachse y senkrecht zu einem Leiter 81 ausgefahren und wieder zurückgefahren (Wayback) wurde, um die Isolierhülle 82 in einer ersten Phase des Abisolierprozesses aufzutrennen; und
- Fig. 3: ein zweites Diagramm mit einem Bewegungsablauf des Abisoliermessers 4 in einer zweiten Phase, in der das abgetrennte Teil der Isolierhülle 82 entlang einer Längsachse x abgezogen wurde.

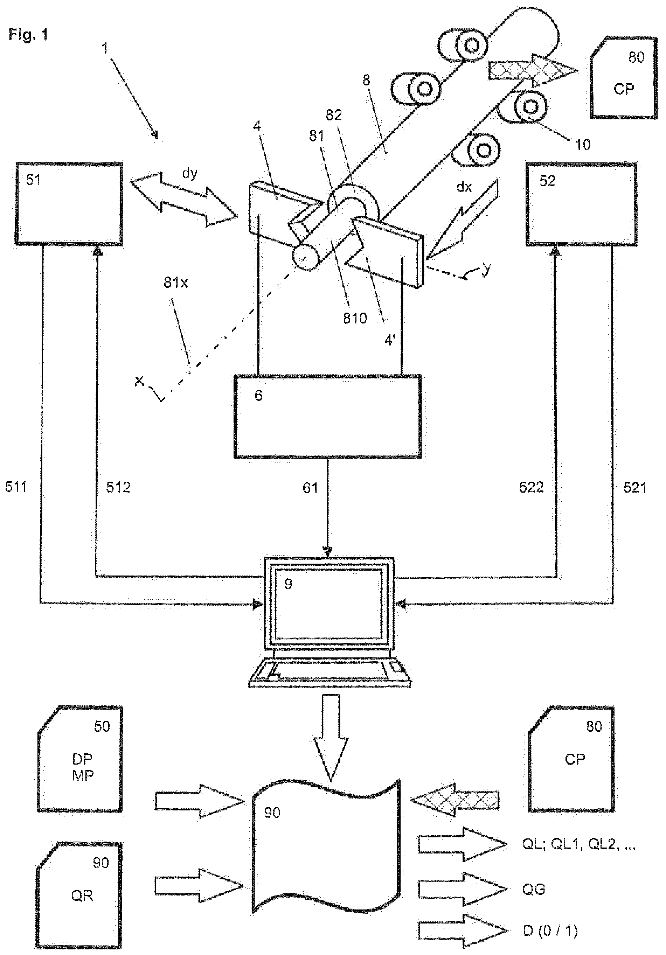

Fig. 1 zeigt eine Abisoliervorrichtug 1 in einer bevorzugten Ausgestaltung, mit einer Haltevorrichtung 10, die ein Kabel 8 entlang seiner Längsachse 81x fest oder axial verschiebbar hält. Die Abisoliervorrichtung 1 umfasst zwei entlang einer Querachse y gegeneinander und entlang einer Längsachse x verschiebbare Abisoliermesser 4 und 4', mittels denen das Kabel 8 abisoliert werden kann, das einen von einer Isolierhülle 82 umschlossenen Leiter 81 aufweist. Durch das Abisolieren wird ein Endstück 810 des Leiters 81 freigelegt, das in einem späteren Arbeitsschritt mit einem Kontaktelement, z.B. einem Kabelschuh, verbunden werden kann.

Für den Antrieb der beiden Abisoliermesser 4, 4' sind zwei Antriebseinheiten 51, 52 vorgesehen. Durch die erste Antriebseinheit 51 sind die Abisoliermesser 4, 4' in Querrichtung y senkrecht zur Längsachse x gegen den Leiter 81 verschiebbar. Die Abisoliermesser 4, 4' können daher gegeneinander ausgefahren und zurückgefahren werden, um die Isolierhülle 82 mit ihren V-förmigen Schneiden aufzutrennen. Durch die zweite Antriebseinheit 52 sind die Abisoliermesser 4, 4' in Längsrichtung x parallel zur Längsachse 81x des Leiters 81 verschiebbar, um ein abgetrenntes Teil der Isolierhülle 82 abzuziehen. Anstatt wie im vorliegenden Ausführungsbeispiel die Abisoliermesser 4, 4' in Längsrichtung zu verschieben, wären auch Varianten denkbar, bei denen ein Verschieben des Kabels 8 beispielsweise mittels der Haltevorrichtung 10 bei festgehaltenen Abisoliermessern 4, 4' vorgenommen wird. Das nachfolgend beschriebene Verfahren, bei dem Bewegungsdaten der Abisoliermesser erfasst und verarbeitet werden, ist auf eine Abisoliervorrichtung 1 mit zum Abziehen der Isolierhülle 82 festgehaltenen Abisoliermessern 4, 4' und längsbewegten Kabel 8 in analoger Weise anwendbar.

Bewegungsdaten der Abisoliermesser 4, 4' werden von den beiden Antriebseinheiten 51, 52 zur Verfügung gestellt und gegebenenfalls umgerechnet. Sofern in den Antriebseinheiten 51, 52 Elektromotoren, z.B. Schrittmotoren, eingesetzt werden, können die Umdrehungen der Motorwellen erfasst und in die dazu korrespondierende Verschiebung der Abisoliermesser 4, 4' in Querrichtung y oder Längsrichtung x umgerechnet werden. Unter Berücksichtigung der Rotationsgeschwindigkeit und der Änderungen der Rotationsgeschwindigkeit können ferner die Geschwindigkeiten und die Beschleunigungen der Abisoliermesser 4, 4' bei der Verschiebung ermittelt werden. Die Bewegungsdaten der Abisoliermesser 4, 4' werden über Sensorleitungen 511, 521 von den Antriebseinheiten 51, 52 zur Steuervorrichtung 9 übertragen.

Die Abisoliermesser 4, 4' können auch durch andere Antriebsvorrichtungen, wie pneumatische Antriebe angetrieben werden. Ebenso können die Bewegungsdaten der Abisoliermesser 4, 4' mit weiteren Sensoren, wie optischen, kapazitiven oder induktiven Sensoren, geliefert werden, die von den Antriebseinheiten 51, 52 getrennt sind.

Die Abisoliervorrichtung 1 umfasst ferner eine Detektiereinrichtung 6 mittels der die Kontaktierung des Leiters 81 durch die Abisoliermesser 4, 4' detektiert wird. Dies z.B. durch Messung der Spannungsänderung an einem Referenzkondensator, der mit den Abisoliermessern 4, 4' verbindbar ist und dessen Kapazität bei Kontaktierung des Leiters 81 erhöht wird.

Die Detektion der Kontaktierung des Leiters 81 kann ebenfalls auf andere Weise erfolgen, z.B. durch galvanische Übertragung eines elektrischen Signals von den Abisoliermessern 4, 4' auf den Leiter 81, das an anderer Stelle vorzugsweise kapazitiv aus dem Leiter 81 ausgekoppelt wird. Das Kabel 8 wird dabei als sogenannte Leckleitung verwendet. Die Detektiereinrichtung 6 ist über eine Signalleitung 61 mit der Steuervorrichtung 9 verbunden, die über Steuerleitungen 512, 522 die erste und die zweite Antriebseinheiten 51, 52 steuern kann.

Die von den Antriebseinheiten 51, 52 sowie der Detektiereinrichtung 6 eintreffenden Informationen werden in der Steuervorrichtung 9 in einem Betriebsprogramm oder Steuerprogramm 90 verarbeitet, das zur Durchführung des erfindungsgemässen Verfahrens ausgelegt ist.

Bei der Durchführung des erfindungsgemässen Verfahrens berücksichtigt das Steuerprogramm 90 vorzugsweise weitere Informationen, wie Vorrichtungsparameter DP und Messparameter MP, die in einer Liste 50 abgelegt sind; Kabelparameter CP, die in einer Liste 80 abgelegt sind; und Qualitätsvorschriften QR, die in einer Liste 90 abgelegt sind. Mittels des Steuerprogramms 90 können in der Folge lokale Qualitätsparameter QL bzw. QL1, QL2, ... für jede Kontaktierung des Leiters 81 durch die Abisoliermesser 4, 4', ein gesamter Qualitätswert QG für das abisolierte Endstück 310 des Leiters 81 sowie ein Entscheid D ermittelt werden, gemäss dem festgelegt wird, ob das abisolierte Kabel 8 für die weiteren Produktionsprozesse verwendbar ist oder beseitigt werden muss.

Der Vorgang des Abisolierens des Leiters 81 umfasst die folgenden Schritte. In einer ersten Phase werden die Abisoliermesser 4, 4' in Querrichtung y gegeneinander ausgefahren, um die Isolierhülle 82 des sich in einer Längsrichtung x erstreckenden Kabels 8 aufzutrennen. In einer zweiten Phase werden die Abisoliermesser 4, 4' in Längsrichtung x verschoben, um die aufgetrennte Isolierhülle 82 vom Leiter 81 abzuziehen. In der der ersten Phase und/oder zweiten Phase können alle oder auch nur einzelne Kontaktierungen detektiert werden. Nach der Detektion einer Kontaktierung werden die Abisoliermesser 4, 4' in Querrichtung y vorzugsweise mit maximaler Geschwindigkeit wieder zurückgefahren, um die Kontaktierung des Leiters 81 aufzuheben.

Das Ausfahren und Zurückfahren bzw. die Vor- und Zurückbewegung der Abisoliermesser 4, 4' in Querrichtung y senkrecht zur Längsachse 81x des Leiters 81 ist durch einen Doppelpfeil dy symbolisiert. Die Verschiebung der Abisoliermesser 4, 4' in Längsrichtung x wird durch einen Pfeil dx symbolisiert.

Um den Abisolierprozess zu verbessern, werden die Bewegungsdaten der Abisoliermesser 4, 4' zum Zeitpunkt der Kontaktierung des Leiters 81 erfasst. Anhand der vorliegenden Daten wird in der Folge der weitere Bewegungsverlauf der Abisoliermesser 4, 4' ermittelt, wobei die Schaltvorgänge berücksichtigt werden, mittels denen die Antriebseinheiten 51, 52 umgeschaltet werden. Anhand aller vorliegenden Daten kann der Bewegungsverlauf der Abisoliermesser 4, 4' innerhalb des Leiters 81, oder ein Teil davon extrapoliert werden. Vorzugsweise werden die Bewegungsdaten der Abisoliermesser 4, 4' nicht nur zu Beginn, sondern während der gesamten Dauer der Kontaktierung für Bewegungen in Querrichtung y und/oder für Bewegungen in Längsrichtung x erfasst.

Die Ermittlung des Bewegungsverlaufs bzw. die Simulation des tatsächlichen Bewegungsverlaufs kann nur auf eine Dimension beschränkt, vorzugsweise auf zwei oder gar drei Dimensionen erweitert werden, sodass ein räumliches Profil der Einkerbungen im Leiter 81 ganz oder teilweise ermittelt werden kann, ohne den beschädigten Leiter 81 optisch zu prüfen. Durch den extrapolierten Bewegungsverlauf der Abisoliermesser 4, 4' bzw. entsprechende Daten des ermittelten Kerbprofils kann somit praktisch ohne Verzögerung ein lokaler Qualitätswert QL für diese Kontaktierung bzw. die resultierende Kerbe ermittelt werden.

Die Verwertung der ermittelten Daten der Einkerbungen kann grundsätzlich auf beliebige Weise erfolgen.

Ermittelte lokale Qualitätswerte QL werden vorzugsweise mit einer Qualitätsvorschrift QR verglichen, um festzustellen, ob die Qualität des Leiters 81 den Anforderungen genügt.

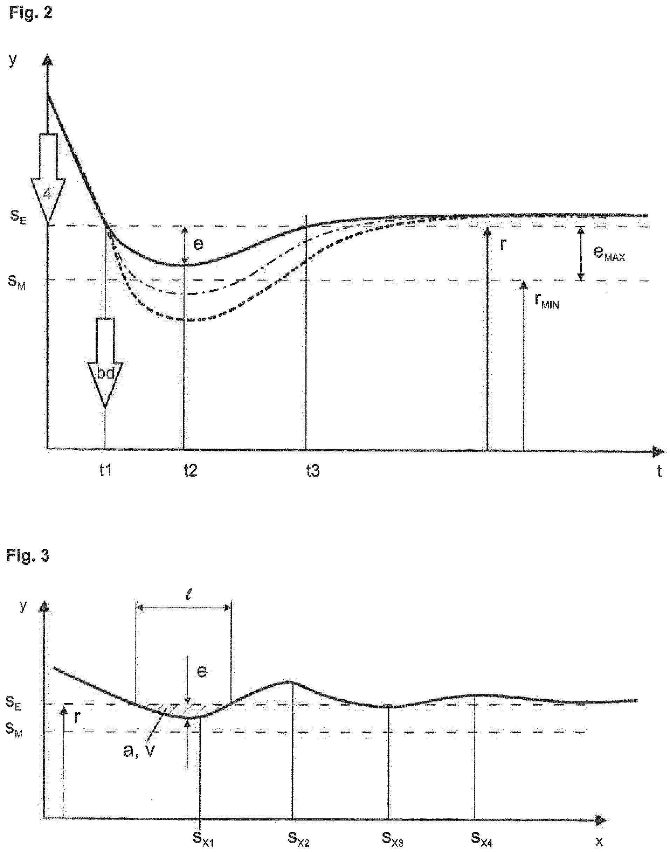

Anhand der in der ersten und zweiten Phase bei der Kontaktierung ermittelten Bewegungsdaten wird vorzugsweise die Eindringtiefe e (siehe Fig. 2) des wenigstens einen Abisoliermessers 4, 4' in den Leiter 81 als lokaler Qualitätswert QL ermittelt und vorzugsweise mit einer maximal zulässigen Eindringtiefe e_{MAX} als Qualitätsvorschrift QR verglichen. Vorzugsweise wird die absolute Eindringtiefe e anhand des Radius r des Leiters 81 normiert, um eine aussagekräftigere relative Eindringtiefe e/r zu erhalten, die mit einer entsprechenden Qualitätsvorschrift QR verglichen wird.

Nebst der Eindringtiefe e wird vorzugsweise auch die Eindringlänge 1 (siehe Fig. 3), d.h. die Länge der Kerbe entlang der Längsrichtung x, als lokaler Qualitätswert QL ermittelt und vorzugsweise mit der maximal zulässigen Eindringlänge l_{MAX} als Qualitätsvorschrift QR verglichen. Alternativ oder zusätzlich kann das Volumen des Kerbprofils als lokaler Qualitätswert QL ermittelt und mit einem maximal zulässigen Eindringvolumen als Qualitätsvorschrift QR verglichen werden. Qualitätsvorschriften QR können in derselben Weise festgelegt werden, wie sie bei reiner optischer Prüfung der Leiter 81 angewendet werden, wobei die Kabeleigenschaften CP vorzugsweise berücksichtigt werden.

Fig. 2 zeigt ein Diagramm mit drei verschiedenen Bewegungsverläufen eines Abisoliermessers 4, das in Funktion der Zeit entlang einer Querachse y ausgefahren und wieder zurückgefahren (Wayback) wurde, um die Isolierhülle 82 in einer ersten Phase des Abisolierprozesses aufzutrennen.

Auf der Ordinate ist die Verschiebung des Abisoliermessers 4 in Querrichtung y eingetragen. und mit einem Pfeil symbolisiert, dessen Spitze die ideale Schnitttiefe s_{E} anzeigt, bei der das Abisoliermesser 4 die Isolierhülle 82 durchtrennt und die Oberfläche des Leiters 81 erreicht hat. Eingetragen sind ferner der Radius r des Leiters 81, die maximal zulässige Eindringtiefe e_{MAX} und somit die maximale Schnitttiefe s_{M}, die das Abisoliermesser 4 erreichen darf, ohne den Leiter 81 unzulässig zu schädigen und den entsprechenden minimalen Radius r_{MIN} des Leiters 81 zu unterschreiten.

Zu Beginn des Abisolierprozesses wird diese ideale Schnitttiefe s_{E} geschätzt und entsprechend programmiert. Beim Ausfahren des Abisoliermessers 4 wird diese ideale Schnitttiefe s_{E} zum Zeitpunkt t1 erreicht. Aus verschiedenen Gründen, wie einer Fehleinschätzung der idealen Schnitttiefe s_{E}, aufgrund von Fertigungstoleranzen und aufgrund einer entsprechenden Programmierung, die vorsieht, dass das Abisoliermesser 4 den Leiter 81 kontaktieren soll, ist das Abisoliermesser 4 zum Zeitpunkt tl noch in Bewegung. Die entsprechenden Bewegungsdaten bd werden über die Leitungen 511 und 521 zur Steuervorrichtung 9 übertragen und dort ausgewertet, um den weiteren Bewegungsverlauf des Abisoliermessers 4 während der Zeit zu bestimmen, innerhalb der das Abisoliermesser 4 den Leiter 81 berührt. Weitere Daten, die z.B. von den Antriebseinheiten 51, 52 während der Kontaktdauer geliefert werden, können bei der Ermittlung des Kerbprofils oder Teilen davon zusätzlich berücksichtigt werden. Die Bewegungsparameter zum Zeitpunkt t1 der Kontaktierung des Leiters 81 sind jedoch von primärer Bedeutung.

Der erste Bewegungsverlauf des Abisoliermessers 4, der mit einer durchgezogenen Linie dargestellt ist, zeigt eine Eindringtiefe e, die die maximale Eindringtiefe e_{MAX} nicht überschreitet. Die beiden weiteren Bewegungslinien überschreiten beide die maximale Eindringtiefe e_{MAX}, weshalb das abisolierte Kabel 8 in diesen Fällen verworfen wird. Die unterschiedlichen Eindringtiefen e, die zeitlich nur leicht versetzt sind, ergeben sich vor allem aus den unterschiedlichen Eintrittsgeschwindigkeiten des Abisoliermessers 4 bei der Kontaktierung des Leiters 81.

Nach Detektion der Kontaktierung wird das Abisoliermesser 4 wieder zurückgefahren (Wayback), um die Kontaktierung mit dem Leiter 81 aufzuheben und das Abisoliermesser 4 aus dem Eingriff mit dem Leiter 81 zu lösen, was für den ersten Bewegungsverlauf etwa zum Zeitpunkt t3 erfolgt. Aufgrund der Deformation des Leiters 81 meldet die Detektiereinrichtung 6 den Unterbruch der Kontaktierung bei einer Verschiebung nur entlang der Querachse y typischerweise bevor das Abisoliermesser 4 den Aussenradius des Leiters 81 erreicht hat. Bei einer zusätzlichen Verschiebung entlang der Längsachse x bleibt der Kontakt typischerweise erhalten, bis das Abisoliermesser 4 den Aussenradius des Leiters 81 erreicht hat. Die Verschiebung des Abisoliermessers 4 während der Zeit, in der das Abisoliermesser 4 den Leiter 81 kontaktiert, entspricht daher zumindest annähernd der Eindringlänge 1.

Anhand der ermittelten Eindringtiefe e kann in der Folge vorteilhaft der Wayback bzw. das Mass des Zurückfahrens des Abisoliermessers 4 festgelegt werden. Z.B. wird das Abisoliermesser um das Mass der Eindringtiefe e multipliziert mit einem Korrekturfaktor k zurückgefahren (Wayback = e ^{∗} k), wobei der Korrekturfaktor k vorzugsweise im Bereich 1,1 bis 1,5 gewählt wird. Das erfindungsgemässe Verfahren erlaubt daher eine rasche Adaption der Auslenkung des Abisoliermessers 4 an den Radius des Leiters 81, der oft nicht über die ganze Kabellänge konstant ist.

Anhand der bei den Kontaktierungen ermittelten Daten wird der zuvor festgelegte Wert für die ideale Schnitttiefe s_{E} vorzugsweise stetig optimiert. Der erste Antrieb 51 wird in der Folge derart eingestellt, dass die Geschwindigkeit des wenigstens einen Abisoliermessers 4, 4' beim Ausfahren in Querrichtung y beim Erreichen der optimierten Schnitttiefe s_{E} unterhalb eines festgelegten Grenzwerts liegt. Da eine Kontaktierung des Leiters 81 durchaus erwünscht ist, um die vollständige Durchtrennung der Isolierhülle 82 feststellen zu können, wird die Endgeschwindigkeit jedoch grösser als null gewählt. Es kann je nach Anwendungsgebiet jedoch auch vorteilhaft sein, den Abisoliervorgang dahingehend zu optimieren, dass eine Kontaktierung des Leiters knapp vermieden wird.

Fig. 3 zeigt ein Diagramm mit einem Bewegungsablauf des Abisoliermessers 4 in einer zweiten Phase, in der das abgetrennte Teil der Isolierhülle 82 entlang einer Längsachse x abgezogen wird. Der Bewegungsverlauf zeigt, dass die Adaption der Auslenkung des Abisoliermessers 4 an den Radius r des Leiters 81 während der gesamten zweiten Phase kontinuierlich weitergeführt wird. Die jeweiligen Schnitttiefen bei den beispielhaft in Fig. 3 dargestellten Auslenkungen sind mit sₓ₁, sₓ₂, sₓ₃ und sₓ₄ bezeichnet. Nach dem schnellen Zurückfahren der Abisoliermesser 4, 4' in Querrichtung y wird dieses in Querrichtung y mit einer Geschwindigkeit wieder ausgefahren, die kleiner, vorzugsweise um ein Mehrfaches kleiner, ist, als die Geschwindigkeit, mit der das wenigstens eine Abisoliermesser 4, 4' beim Auftrennen der Isolierhülle 82 ausgefahren wurde. Das Abisoliermesser 4 verhält sich somit wie ein Messkopf, der die Oberfläche des Leiters 81 abtastet. Dabei ist es möglich, dass das Abisoliermesser 4 lokal wieder in den Leiter 81 eintritt und Kerben verursacht, für die wiederum Bewegungsdaten erfasst werden, um das Kerbprofil oder Teile davon zu ermitteln. Fig. 3 zeigt, dass die Eindringtiefe e, die Eindringlänge 1 sowie die Querschnittsfläche bzw. das Kerbprofil a oder das Volumen v der Kerbe ermittelt werden.

Die beschriebene Adaption wird vorzugsweise fortgeführt, bis der Abisolierprozess abgeschlossen ist. Da die Abisoliermesser 4 in der zweiten Phase mit reduzierter Geschwindigkeit ausgefahren werden, ist mit einer unzulässigen Verletzung des Leiters 81 kaum zu rechnen. Trotzdem werden die ermittelten Daten der Einkerbung vorzugsweise auch in der zweiten Phase mit den vorgegebenen Qualitätsvorschriften QR verglichen.

Zur Reduktion des Kerbprofils, insbesondere der Eindringlänge 1, wird die Verschiebung der Abisoliermesser 4, 4' in Längsrichtung x beim Abziehen der aufgetrennten Isolierhülle 82 nach der Detektion einer Kontaktierung des Leiters 81 vorzugsweise verzögert oder gestoppt, bis die Kontaktierung durch den Wayback wieder aufgehoben ist. Auf diese Weise kann die Verformung des Leiters 81 auf kurze Einkerbungen reduziert werden. Sobald die Kontaktierung aufgehoben ist, wird die Verschiebung der Abisoliermesser 4, 4' in Längsrichtung x zum Abziehen der aufgetrennten Isolierhülle 82 vorzugsweise bis zu einer vorgegebenen Maximalgeschwindigkeit wieder beschleunigt.

Als Qualitätsvorschrift QR können die maximal zulässige Eindringtiefe e_{MAX} oder die maximal zulässige Eindringlänge l_{MAX} oder auch ein Maximalprofil p_{MAX} für eine maximal zulässige Kerbe festgelegt werden, die beim Eindringen der Abisoliermesser 4, 4' in den Leiter 81 nicht überschritten werden sollen. Diese Grössen werden vorzugsweise in Abhängigkeit der Kabeleigenschaften, insbesondere der Kabelgeometrie und den verwendeten Kabelmaterialien, festgelegt.

Die Beschädigung des Leiters 81 im Bereich der Auftrennung der Isolierhülle 82 in der ersten Phase ist normalerweise kritischer als Beschädigungen, die in der zweiten Phase während der Verschiebung der Abisoliermesser 4, 4' in Längsrichtung auftreten. Vorzugsweise werden die Werte der Qualitätsvorschrift QR daher in Funktion der Längsverschiebung x geändert. Z.B. wird die maximal zulässige Eindringtiefe e_{MAX} und/oder die maximal zulässige Eindringlänge l_{MAX} in Abhängigkeit der Längsverschiebung x mit einem Gewichtungsfaktor gewichtet, der z.B. linear ändert.

Um den Gesamtzustand des Kabels 8 zu prüfen, wird vorzugsweise für jede Kontaktierung der Abisoliermesser 4, 4' mit dem Leiter 81 aus den ermittelten Bewegungsdaten je ein lokaler Qualitätswert QL1, QL2, ..., QLn gebildet. Aus den lokalen Qualitätswerten QL1, QL2, ..., QLn wird in der Folge ein globaler Qualitätswert QG gebildet, der mit einem entsprechenden Wert der Qualitätsvorschrift QR verglichen wird, um festzustellen, ob die Qualität des Leiters 81 den Anforderungen genügt.

## Patentansprüche

1. Verfahren zum Abisolieren und Prüfen eines Kabels (8), das wenigstens einen in einer Isolierhülle (82) eingeschlossenen Leiter (81) umfasst, mit einer Abisoliervorrichtung (1), die eine Steuervorrichtung (9) und wenigstens ein Abisoliermesser (4, 4') aufweist, mit folgenden Schritten:
a) in einer ersten Phase Ausfahren des wenigstens einen Abisoliermessers (4, 4') in Querrichtung (y) zum Auftrennen der Isolierhülle (82) des sich in einer Längsrichtung (x) erstreckenden Kabels (8),
b) in einer zweiten Phase Verschieben des wenigstens einen Abisoliermessers (4, 4') in Längsrichtung (x) parallel zum Leiter (81) in Relation zum Kabel (8) zum Abziehen der aufgetrennten Isolierhülle (82),
c) Detektieren wenigstens einer ersten Kontaktierung des Leiters (81) durch das wenigstens eine Abisoliermesser (4, 4') in der ersten Phase und in der zweiten Phase,
**dadurch gekennzeichnet, dass**
d) Zurückfahren des wenigstens einen Abisoliermessers (4, 4') in Querrichtung (y) bei Detektion einer Kontaktierung zur Aufhebung der Kontaktierung,
e) die Bewegungsdaten für Bewegungen in Querrichtung (x) und in Längsrichtung (y) des wenigstens einen Abisoliermessers (4, 4') zum Zeitpunkt der Kontaktierung des Leiters (81) erfasst werden,
f) für die betreffende Kontaktierung des Leiters (81) aus den ermittelten Bewegungsdaten ein weiterführender Bewegungsverlauf des wenigstens einen Abisoliermessers (4, 4') ermittelt und gegebenenfalls ein entsprechender lokaler Qualitätswert (QL) gebildet wird; und
g) dass, sofern ein lokaler Qualitätswert (QL) gebildet wird, der lokale Qualitätswert (QL) mit einer Qualitätsvorschrift (QR) verglichen wird, um festzustellen, ob die Qualität des Leiters (81) den Anforderungen genügt.

2. Verfahren nach Anspruch 1,
**dadurch gekennzeichnet, dass** innerhalb der ersten Phase und/oder der zweiten Phase anhand der bei der Kontaktierung ermittelten Bewegungsdaten die Eindringtiefe (e) des wenigstens einen Abisoliermessers (4, 4') in den Leiter (81) als lokaler Qualitätswert (QL) ermittelt und vorzugsweise mit einer maximal zulässigen Eindringtiefe (e_{MAX}) als Qualitätsvorschrift (QR) verglichen wird.

3. Verfahren nach Anspruch 2, **dadurch gekennzeichnet, dass** innerhalb der zweiten Phase anhand der während der Kontaktierung ermittelten Bewegungsdaten die Eindringlänge (1) als lokaler Qualitätswert (QL) ermittelt und vorzugsweise mit einer maximal zulässigen Eindringlänge (l_{MAX}) als Qualitätsvorschrift (QR) verglichen werden.

4. Verfahren nach Anspruch 2 oder 3,
**dadurch gekennzeichnet, dass** zur Ermittlung der Eindringtiefe (e) und/oder der Eindringlänge (1) zusätzlich Vorrichtungsparameter (DP) der Antriebsvorrichtung (51) und/oder Messerparameter (MP) des wenigstens einen Abisoliermessers (4, 4') und/oder Kabelparameter (CP) des Kabels (8) berücksichtigt werden.

5. Verfahren nach Anspruch 4,
**dadurch gekennzeichnet, dass**
a) als Vorrichtungsparameter (DP) die Masse der mit dem wenigstens einen Abisoliermesser (4, 4') verbundenen bewegten Teile, die Eigenschaften des ersten und/oder zweiten Antriebs (51, 52), und vorzugsweise Schaltverzögerungen; und/oder
b) als Messerparameter (MP) die Form des wenigstens einen Abisoliermessers (4, 4'); und/oder
c) als Kabelparameter (CP) die Kabelgeometrie, insbesondere der Durchmesser des Leiters (81), und die Festigkeit des Leiters (81) und der Isolierhülle (82)
berücksichtigt werden.

6. Verfahren nach einem der Ansprüche 1-5,
**dadurch gekennzeichnet, dass** anhand wenigstens einer der detektieren Kontaktierungen ein zuvor festgelegter Wert einer Schnitttiefe (s_{E}) in das Kabel (8) stetig optimiert wird und dass der erste Antrieb (51) derart eingestellt wird, dass die Geschwindigkeit des wenigstens einen Abisoliermessers (4, 4') beim Ausfahren in Querrichtung (y) beim Erreichen der optimierten Schnitttiefe (s_{E}) unterhalb eines festgelegten Grenzwerts liegt.

7. Verfahren nach einem der Ansprüche 2-6,
**dadurch gekennzeichnet, dass** die Parameter für das Zurückfahren des wenigstens einen Abisoliermessers (4, 4') in Querrichtung (y) in Abhängigkeit der ermittelten Eindringtiefe (e) derart gewählt werden, dass die Kontaktierung des Leiters (81) aufgehoben wird.

8. Verfahren nach einem der Ansprüche 1-7,
**dadurch gekennzeichnet, dass** nach dem Zurückfahren des wenigstens einen Abisoliermessers (4, 4') in Querrichtung (y) dieses in Querrichtung (y) mit einer Geschwindigkeit wieder ausgefahren wird, die kleiner, vorzugsweise um ein Mehrfaches kleiner, ist, als die Geschwindigkeit, mit der das wenigstens eine Abisoliermesser (4, 4') beim Auftrennen der Isolierhülle (82) ausgefahren wurde.

9. Verfahren nach einem der Ansprüche 1-8,
**dadurch gekennzeichnet, dass** die Verschiebung des wenigstens einen Abisoliermessers (4, 4') in Längsrichtung (x) zum Abziehen der aufgetrennten Isolierhülle (82) nach der Detektion der Kontaktierung des Leiters (81) verzögert oder gestoppt wird, bis die Kontaktierung aufgehoben ist, und/oder dass die Verschiebung des wenigstens einen Abisoliermessers (4, 4') in Längsrichtung (x) zum Abziehen der aufgetrennten Isolierhülle (82) nach Aufhebung der Kontaktierung beschleunigt wird.

10. Verfahren nach einem der Ansprüche 1-9,
**dadurch gekennzeichnet, dass** die Bewegungsdaten, insbesondere, die Position einerseits sowie der Weg in Querrichtung (y) und Längsrichtung (x) und/oder die Geschwindigkeit und/oder die Beschleunigung andererseits für jede Kontaktierung aufgezeichnet werden.

11. Verfahren nach einem der Ansprüche 1 - 10,
**dadurch gekennzeichnet, dass** als Qualitätsvorschrift (QR) ein Maximalprofil (p_{MAX}) für eine maximal zulässige Kerbe festgelegt wird, die beim Eindringen des wenigstens einen Abisoliermessers (4, 4') in den Leiter (81) resultiert, wobei das Maximalprofil (p_{MAX}) vorzugsweise wenigstens die maximal zulässige Eindringtiefe (e_{MAX}) und/oder die maximal zulässige Eindringlänge (l_{MAX}) umfasst.

12. Verfahren nach einem der Ansprüche 1 - 11,
**dadurch gekennzeichnet, dass** das Maximalprofil (p_{MAX}) oder Teile davon in Funktion der Längsverschiebung (x) geändert werden, wobei die maximal zulässige Eindringtiefe (e_{MAX}) und/oder die maximal zulässige Eindringlänge (l_{MAX}) vorzugsweise in Abhängigkeit der Längsverschiebung (x) mit wenigstens einem Gewichtungsfaktor gewichtet werden.

13. Verfahren nach einem der Ansprüche 1 - 12,
**dadurch gekennzeichnet, dass** für jede Kontaktierung des wenigstens einen Abisoliermessers (4, 4') mit dem Leiter (81) aus den ermittelten Bewegungsdaten je ein lokaler Qualitätswert (QL1, QL2, ..., QLn) gebildet wird und dass aus den lokalen Qualitätswerten (QL1, QL2, ..., QLn) ein globaler Qualitätswert (QG) gebildet wird, der mit der Qualitätsvorschrift (QR) verglichen wird, um festzustellen, ob die Qualität des Leiters (81) den Anforderungen genügt.

## Claims

1. A method for removing the insulation from and testing a cable (8), which comprises at least one conductor (81) enclosed in a conductor insulation (82), with a stripping device (1) that has a control device (9) and at least one stripping blade (4, 4'), with said method comprising the following steps:
a) extending the at least one stripping blade (4, 4') in the transverse direction (y) in a first phase in order to separate the conductor insulation (82) of the cable (8) extending in a longitudinal direction (x),
b) displacing the at least one stripping blade (4, 4') relative to the cable (8) in the longitudinal direction (x) parallel to the conductor (81) in a second phase in order to remove the separated conductor insulation (82),
c) detecting at least a first contact of the conductor (81) with the at least one stripping blade (4, 4') in the first phase and in the second phase,
**characterized in that**
d) the at least one stripping blade (4, 4') is retracted in the transverse direction (y) upon detection of a contact in order to terminate the contact,
e) the motion data for motions in the transverse direction (x) and in the longitudinal direction (y) of the at least one stripping blade (4, 4') at the time of the contact with the conductor (81) is acquired,
f) a further path of motions of the at least one stripping blade (4, 4') for the relevant contact with the conductor (81) is determined from the acquired motion data and a corresponding local quality value (QL) is optionally formed, and,
g) if a local quality value (QL) is formed, the local quality value (QL) is compared with a quality regulation (QR) in order to determine if the quality of the conductor (81) meets the requirements.

2. The method according to claim 1,
**characterized in that** a local quality value (QL) in the form of the penetration depth (e) of the at least one stripping blade (4, 4') into the conductor (81) is determined within the first phase and/or the second phase based on the motion data acquired during the contact and preferably compared with a quality regulation (QR) in the form of a maximum permissible penetration depth (e_{MAX}).

3. The method according to claim 2,
**characterized in that** a local quality value (QL) in the form of the penetration length (1) is determined within the second phase based on the motion data acquired during the contact and preferably compared with a quality regulation (QR) in the form of a maximum permissible penetration length (l_{MAX}).

4. The device according to claim 2 or 3,
**characterized in that** additional device parameters (DP) of the drive device (51) and/or blade parameters (MP) of the at least one stripping blade (4, 4') and/or cable parameters (CP) of the cable (8) are taken into account for determining the penetration depth (e) and/or the penetration length (1).

5. The method according to claim 4,
**characterized in that**
a) the mass of the moving parts connected to the at least one stripping blade (4, 4'), the properties of the first and/or second drive (51, 52) and preferably switching delays are taken into account as device parameters (DP) and/or
b) the shape of the at least one stripping blade (4, 4') is taken into account as blade parameter (MP) and/or
c) the cable geometry, particularly the diameter of the conductor (81), and the strength of the conductor (81) and the conductor insulation (82) are taken into account as cable parameters (CP).

6. The method according to one of claims 1-5,
**characterized in that** a predefined value of a cutting depth (S_{E}) into the cable (8) is continuously optimized based on at least one of the detected contacts, and **in that** the first drive (51) is adjusted in such a way that the speed of the at least one stripping blade (4, 4') during the extension in the transverse direction (y) lies below a defined limiting value when the optimized cutting depth (S_{E}) is reached.

7. The method according to one of claims 2-6,
**characterized in that** the parameters for the retraction of the at least one stripping blade (4, 4') in the transverse direction (y) are chosen in dependence on the determined penetration depth (e) in such a way that the contact with the conductor (81) is terminated.

8. The method according to one of claims 1-7,
**characterized in that** the at least one stripping blade (4, 4') is after its retraction in the transverse direction (y) once again extended in the transverse direction (y) with a speed that is slower, preferably several times slower, than the speed, with which the at least one stripping blade (4, 4') was extended during the separation of the conductor insulation (82).

9. The method according to one of claims 1-8,
**characterized in that** the displacement of the at least one stripping blade (4, 4') in the longitudinal direction (x) for removing the separated conductor insulation (82) is after the detection of the contact with the conductor (81) delayed or stopped until the contact is terminated and/or **in that** the displacement of the at least one stripping blade (4, 4') in the longitudinal direction (x) for removing the separated conductor insulation (82) is accelerated after the contact has been terminated.

10. The method according to one of claims 1-9,
**characterized in that** the motion data, particularly the position on the one hand and the path in the transverse direction (y) and the longitudinal direction (x) and/or the speed and/or the acceleration on the other hand, is recorded for each contact.

11. The method according to one of claims 1-10,
**characterized in that** a maximum profile (p_{MAX}) for a maximum permissible notch resulting during the penetration of the at least one stripping blade (4, 4') into the conductor (81) is defined as quality regulation (QR), wherein the maximum profile (p_{MAX}) preferably comprises at least the maximum permissible penetration depth (e_{MAX}) and/or the maximum permissible penetration length (l_{MAX}).

12. The method according to one of claims 1-11,
**characterized in that** the maximum profile (p_{MAX}) or parts thereof are changed as a function of the longitudinal displacement (x), wherein the maximum permissible penetration depth (e_{MAX}) and/or the maximum permissible penetration length (l_{MAX}) preferably are weighted with at least one weighting factor in dependence on the longitudinal displacement (x).

13. The method according to one of claims 1-12,
**characterized in that** a local quality value (QL1, QL2, ..., QLn) is respectively formed of the acquired motion data for each contact of the at least one stripping blade (4, 4') with the conductor (81), and **in that** a global quality value (QG) is formed of the local quality values (QL1, QL2, ..., QLn) and compared with the quality regulation (QR) in order to determine if the quality of the conductor (81) meets the requirements.

## Revendications

1. Procédé, destiné à dénuder et à vérifier un câble (8), qui comprend au moins un conducteur (81) renfermé dans une gaine isolante (82) à l'aide d'un dispositif de dénudage (1), qui comporte un dispositif de commande (9) et au moins une lame à dénuder (4, 4'), comportant les étapes suivantes, consistant à :
a) dans une première phase, faire sortir l'au moins une lame à dénuder (4, 4') dans la direction transversale (y), pour inciser la gaine isolante (82) du câble (8), qui s'étend dans une direction longitudinale (x),
b) dans une deuxième phase, déplacer l'au moins une lame à dénuder (4, 4') dans la direction longitudinale (x), à la parallèle du conducteur (81) par rapport au câble (8), pour retirer la gaine isolante (82) incisée,
c) détecter au moins un premier contact du conducteur (81) par l'au moins une lame à dénuder (4, 4') dans la première phase et dans la deuxième phase,
caractérisé
d) en ce que, si un contact a été détecté, on ramène en arrière l'au moins une lame à dénuder (4, 4') dans la direction transversale (y) pour supprimer le contact,
e) en ce qu'on détecte les données de déplacement pour des déplacements dans la direction transversale (x) et dans la direction longitudinale (y) de l'au moins une lame à dénuder (4, 4') au moment de la mise en contact du conducteur (81),
f) en ce que, pour le contact concerné du conducteur (81), on détermine à partir des données de déplacement déterminées un trajet de déplacement menant plus loin de l'au moins une lame à dénuder (4, 4') et on créé le cas échéant une valeur qualitative locale (QL) correspondante ; et
g) en ce que, si on créé une valeur qualitative locale (QL), on compare la valeur qualitative (QL) locale avec une prescription qualitative (QR), pour constater si la qualité du conducteur (81) satisfait aux exigences.

2. Procédé selon la revendication 1, **caractérisé en ce que** dans la première phase et/ou dans la deuxième phase, on détermine à l'aide des données de déplacement détectées pendant la mise en contact la profondeur de pénétration (e) de l'au moins une lame à dénuder (4, 4') dans le conducteur (81) en tant que valeur qualitative locale (QL) et on la compare de préférence avec une profondeur de pénétration maximale autorisée (e_{MAX}) en tant que prescription qualitative (QR).

3. Procédé selon la revendication 2, **caractérisé en ce que** dans la deuxième phase, on détermine à l'aide des données de déplacement déterminées pendant la mise en contact la longueur de pénétration (1) en tant que valeur qualitative locale (QL) et on la compare de préférence avec une longueur de pénétration maximale autorisée (l_{MAX}) en tant que prescription qualitative (QR).

4. Procédé selon la revendication 3, **caractérisé en ce que** pour déterminer la profondeur de pénétration (e) et/ou la longueur de pénétration (1), on prend en considération additionnellement des paramètres de dispositif (DP) du dispositif d'entraînement (51) et/ou des paramètres de lame (MP) de l'au moins une lame à dénuder (4, 4') et/ou des paramètres de câble (CP) du câble (8).

5. Procédé selon la revendication 4, **caractérisé**
a) **en ce qu'**en tant que paramètres de dispositif (DP), on prend en considération la masse des pièces déplacées, reliées avec l'au moins une lame à dénuder (4, 4'), les propriétés du premier et/ou du deuxième entraînement (51, 52), et de préférence des temporisations de commutation ; et/ou
b) **en ce qu'**en tant que paramètres de lame (MP), on prend en considération la forme de l'au moins une lame à dénuder (4, 4') ; et/ou
c) **en ce qu'**en tant que paramètres de câble (CP), on prend en considération la géométrie du câble, notamment le diamètre du conducteur (81), et la solidité du conducteur (81) et de la gaine isolante (82).

6. Procédé selon l'une quelconque des revendications 1 à 5, **caractérisé en ce qu'**à l'aide d'au moins l'un des contacts détectés, on optimise en permanence une valeur précédemment fixée d'une profondeur d'incision (S_{E}) du câble (8) et **en ce qu'**on règle le premier entraînement (51) de telle sorte qu'à l'atteinte de la profondeur d'incision (S_{E}) optimisée, la vitesse de l'au moins une lame à dénuder (4, 4') lors de la sortie dans la direction transversale (y) soit inférieure à une valeur limite fixée.

7. Procédé selon l'une quelconque des revendications 2 à 6, **caractérisé en ce qu'**on sélectionne les paramètres pour ramener en arrière l'au moins une lame à dénuder (4, 4') dans la direction transversale (y) en fonction de la profondeur de pénétration (e) déterminée, de sorte à supprimer le contact du conducteur (81).

8. Procédé selon l'une quelconque des revendications 1 à 7, **caractérisé en ce que** qu'après avoir ramené en arrière l'au moins une lame à dénuder (4, 4') dans la direction transversale (y), on la fait ressortir dans la direction transversale (y) à une vitesse qui est inférieure, de préférence inférieure d'un multiple à la vitesse à laquelle l'au moins une lame à dénuder (4, 4') a été sortie lors de l'incision de la gaine isolante (82).

9. Procédé selon l'une quelconque des revendications 1 à 8, **caractérisé en ce qu'**on temporise ou on arrête le déplacement de l'au moins une lame à dénuder (4, 4') dans la direction longitudinale (x) pour retirer la gaine isolante (82) incisée après la détection du contact du conducteur (81) jusqu'à ce que le contact soit supprimé et/ou **en ce qu'**on accélère le déplacement de l'au moins une lame à dénuder (4, 4') dans la direction longitudinale (x) pour retirer la gaine isolante (82) incisée, après la suppression du contact.

10. Procédé selon l'une quelconque des revendications 1 à 9, **caractérisé en ce qu'**on enregistre les données de déplacement, notamment la position d'une part, ainsi que la course dans la direction transversale (y) et dans la direction longitudinale (x) et/ou la vitesse et/ou l'accélération d'autre part pour chaque contact.

11. Procédé selon l'une quelconque des revendications 1 à 10, **caractérisé en ce qu'**on fixe en tant que prescription qualitative (QR) un profil maximal (p_{MAX}) pour une entaille maximale autorisée résultant de la pénétration de l'au moins une lame à dénuder (4, 4') dans le conducteur (81), le profil maximal (p_{MAX}) comprenant de préférence au moins la profondeur de pénétration (e_{MAX}) maximale autorisée et/ou la longueur de pénétration (l_{MAX}) maximale autorisée.

12. Procédé selon l'une quelconque des revendications 1 à 11, **caractérisé en ce qu'**on modifie le profil maximal (p_{MAX}) ou des parties de celui-ci en fonction du déplacement longitudinal (x), la profondeur de pénétration (e_{MAX}) maximale autorisée et/ou la longueur de pénétration (l_{MAX}) maximale autorisée étant pondérées de préférence en fonction du déplacement longitudinal (x) à l'aide d'au moins un coefficient de pondération.

13. Procédé selon l'une quelconque des revendications 1 à 12, **caractérisé en ce que** pour chaque contact de l'au moins une lame à dénuder (4, 4') avec le conducteur (81), on créé à partir des données de déplacement déterminées chaque fois une valeur qualitative locale (QL1, QL2, ..., QLn), et **en ce qu'**à partir des valeurs qualitatives locales (QL1, QL2, ..., QLn), on créé une valeur qualitative globale (QG) que l'on compare avec la prescription qualitative (QR) pour constater si la qualité du conducteur (81) satisfait aux exigences.
